# EUROPEAN PATENT SPECIFICATION

(11) **EP 0 903 100 B1**
(45) Date of publication and mention of the grant of the patent: **11.04.2001**
(21) Application number: 98500199.9
(22) Date of filing: 08.09.1998
(51) Int. Cl.: A47J 37/04

(54) **Tunnel oven**
Tunnelofen
Four à tunnel

(30) Priority: 17.09.1997 ES 9702375
(43) Date of publication of application: 24.03.1999
(73) Proprietor: Mirror Maquinaria Industrial Restauracion Rapida y Organizacion de Restaurantes S.A., 08907 L'Hospitalet de Llobregat (ES)
(72) Inventor: Gil Garcia, Vicente, 08907 L'Hospitalet de Llobregat (Barca.) (ES)
(74) Representative: Ponti Sales, Adelaida

(56) References cited:
- WO-A-88/01719
- DE-A- 4 239 620
- DE-A- 4 401 109
- FR-A- 2 689 214
- US-A- 4 686 895
- US-A- 5 802 959

## Description

The present invention relates to a tunnel oven for heating precooked food products, specially potato chips, comprising means for continuously conveying the food products therethrough and means for heating said food.

### BACKGROUND OF THE INVENTION

As is known, a common solution for heating and cooking food is using ovens in which heat is provided to the food by means of electrical resistors.

The use of such a system with resistors for heating and cooking food products has the drawback that a high amount of heat and a considerable heating time are required.

In order to solve this drawback, often the food is heated and cooked by frying it in oil. Even though in this way the overall heating time of the product is reduced, a new drawback arises in that the heated food has an excess of oil that alters its taste. Further, this method requires continuous maintenance of the frying pan being used, with periodic change of the oil and therefore a high consumption thereof.

Patent DE-A-4239620 refers to a tunnel oven for heating precooked food products comprising means for continuously conveying the food products therethrough and means for heating said food placed above and below the means for conveying the food.

The heating means are infrared rays which does not provide a quick heating of the food.

### DESCRIPTION OF THE INVENTION

The oven according to the invention solves the mentioned drawbacks and provides further advantages, as will be described below.

The tunnel oven of the present invention is characterized in that the means for heating said food products are short-wave halogen lamps and in that the halogen lamps placed below the means for conveying the food are covered by respective glass-ceramic plates.

Thanks to this feature, by means of the radiation emitted by the halogen lamps the heating and cooking of the food products is achieved in a much shorter time than with conventional ovens, without the need to use oil or electrical resistors which require higher consumption and time.

This advantage is due to the fact that the lamps provide a radiation that, apart from heating the outer surface of the food products, penetrates inside its pores, heating and cooking them also from the inside; for this reason, the oven is particularly suitable for potato chips and other highly porous food products.

The use of halogen lamps below the means for conveying food is possible because each lamp is covered by the corresponding glass-ceramic plate.

By virtue of this feature, the lamps are protected from spatter coming from the food products, since this spatter could cause the lamps to explode due to the thermal shock that would occur.

Preferably, said glass-ceramic plates are arcuate, with the shape of a roof tile, and cover the lamps arranged below the means for conveying the food.

Preferably, the wavelength emitted by the halogen lamps is in the range between 0,76 and 2 *µ*m.

Advantageously, the means for continuously conveying the food products through the oven are a mesh conveyor belt.

This features allows to deposit on the continuous conveyor belt the precooked food products and withdraw them after a short time span, at the opposite end of the belt, ready to be eaten; the radiation emitted by the lower lamps reaches the food through the openings of the mesh.

### BRIEF DESCRIPTION OF THE DRAWINGS

For a better understanding of what is described in the present specification, some drawings are enclosed in which a practical embodiment of a tunnel oven is shown by way of non-limiting example.

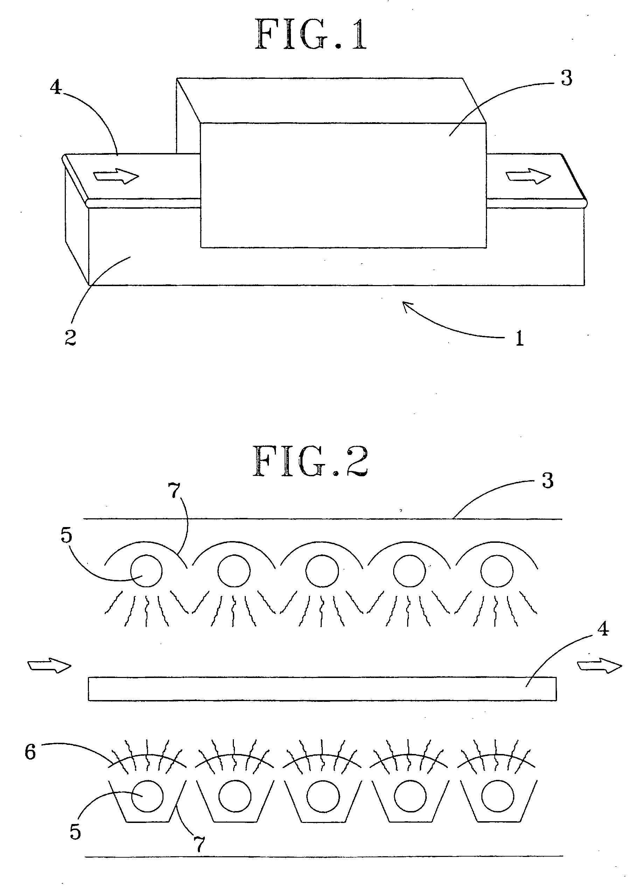

In said drawings, figure 1 is a schematic perspective view of a tunnel oven, and figure 2 shows, also schematically, the arrangement of the halogen lamps and the glass-ceramic plates within the oven.

### DESCRIPTION OF A PREFERRED EMBODIMENT

As can be seen in figure 1, the tunnel oven 1 according to the invention comprises an elongate structure or bed 2, and a housing 3, preferably made of stainless steel, arranged at the central portion of said bed and protecting the oven itself.

A metal mesh conveyor belt 4 it supported on the bed 2 and has the function of conveying the food products through the oven 3.

As shown in figure 2, a plurality of halogen lamps 5 are arranged above and below the conveyor belt 4.

The lower lamps 5 are protected by glass-ceramic plates 6, having an arcuate shape like that of a roof tile, since spatter from the food could affect more seriously this lamps 5.

All the lamps 5, both upper and lower, are partially surrounded by a reflective screen 7, in order to seize a maximum portion of the emitted radiation.

The glass-ceramic plates 6 can be of the type described, for example, in Spanish Utility Model 8702751, that can bear high temperatures of up to 800°C maintaining the appearance and transparency of conventional glass because they are constituted by microcrystals dispersed in a residual vitreous phase.

Even though a particular embodiment of the invention has been shown and described, it is obvious that all the elements of the oven that are not essential can be substituted by others that are technically equivalent, without departing from the scope of protection defined by the appended claims.

For example, the number of lamps and their particular arrangement in the oven will depend on the requirements of each particular case.

Similarly, the glass-ceramic plates 6 can have any other shape, e.g. they can be flat instead of arcuate, and can be arranged to protect all the lamps or only the lower ones.

## Claims

1. Tunnel oven for heating precooked food products, specially potato chips, comprising means (4) for continuously conveying the food products therethrough and means for heating said food placed above and below the means (4) for conveying the food, characterized in that the means for heating said food products are short-wave halogen lamps (5) and in that the halogen lamps (5) placed below the means (4) for conveying the food are covered by respective glass-ceramic plates (6).

2. Oven as claimed in claims 1, characterized in that said glass-ceramic plates (6) are arcuate, with the shape of a roof tile.

3. Oven as claimed in any of the preceding claims, characterized in that the wavelength emitted by the halogen lamps (5) is in the range between 0,76 and 2 *µ*m.

4. Oven as claimed in any of the preceding claims, characterized in that the means for continuously conveying the food products through the oven are a mesh conveyor belt (4).

## Patentansprüche

1. Tunnelofen zum Erhitzen von vorgekochten Nahrungsmitteln, insbesondere Kartoffelchips, mit einer Einrichtung (4) zum kontinuierlichen Hindurchtransport der Nahrungsmittel und einer Einrichtung zum Erhitzen der Nahrungsmittel, die oberhalb und unterhalb der Einrichtung (4) zum Transport der Nahrung angeordnet ist, dadurch gekennzeichnet, dass die Einrichtung zum Erhitzen der Nahrungsprodukte aus kurzwelligen Halogenlampen (5) besteht, und dass die Halogenlampen (5), die unterhalb der Einrichtung (4) zum Transport der Nahrung angeordnet sind, mittels entsprechender Glaskeramikplatten (6) abgedeckt sind.

2. Ofen nach Anspruch 1, dadurch gekennzeichnet, dass die Glaskeramikplatten (6) in Form eines Dachziegels gekrümmt sind.

3. Ofen nach einem der vorangehenden Ansprüche, dadurch gekennzeichnet, dass die von den Halogenlampen (5) abgegebene Wellenlänge im Bereich zwischen 0,76 und 0,2 µm liegt.

4. Ofen nach einem der vorangehenden Ansprüche, dadurch gekennzeichnet, dass die Einrichtung zum kontinuierlichen Transport der Nahrungsmittel aus einem Siebtransportband (4) besteht.

## Revendications

1. Four de type tunnel pour le chauffage de produits alimentaires précuits, en particulier des chips, comprenant des moyens (4) pour transporter de façon continue les produits alimentaires à travers ledit four et des moyens pour chauffer lesdits produits alimentaires placés au-dessus et au-dessous des moyens (4) de transport des produits alimentaires, caractérisé en ce que les moyens de chauffage desdits produits alimentaires sont des lampes halogènes (5) à onde courte et en ce que les lampes halogènes (5) placées au-dessous des moyens (4) de transport des produits alimentaires sont couvertes par des plaques respectives (6) de vitrocéramique.

2. Four suivant la revendication 1, caractérisé en ce que lesdites plaques (6) de vitrocéramique sont incurvées, présentant la forme d'une tuile.

3. Four suivant l'une quelconque des revendications précédentes, caractérisé en ce que la longueur d'onde émise par les lampes halogènes (5) se situe dans une gamme comprise entre 0,76 et 2 µm.

4. Four suivant l'une quelconque des revendications précédentes, caractérisé en ce que les moyens de transport en continu des produits alimentaires au travers du four sont une courroie en mailles (4) de convoyeur.
